# EUROPÄISCHE PATENTSCHRIFT

(11) **EP 2 076 413 B1**
(45) Veröffentlichungstag und Bekanntmachung des Hinweises auf die Patenterteilung: **18.09.2013**
(21) Anmeldenummer: 07788087.0
(22) Anmeldetag: 31.07.2007
(51) Int. Cl.: B60S 1/08

(54) **ANSCHLUSSSYSTEM MIT AUSSENLIEGENDER LEITUNGSFÜHRUNG AN WISCHERMOTORGEHÄUSEN**
CONNECTION SYSTEM COMPRISING AN EXTERNAL CABLE GUIDE ON WIPER MOTOR HOUSINGS
SYSTEME DE RACCORDEMENT COMPRENANT UN CABLAGE EXTERNE SUR DES LOGEMENTS DE MOTEURS D'ESSUIE-GLACES

(30) Priorität: 28.09.2006 DE 102006045928
(43) Veröffentlichungstag der Anmeldung: 08.07.2009
(73) Patentinhaber: Robert Bosch GmbH, 70442 Stuttgart (DE)
(72) Erfinder: LAUK, Detlef, 77871 Renchen (DE); BOHN, Roland, 77815 Buehl (DE); GABRIEL DE DIAS, Orlando, 76131 Karlsruhe (DE); HUESGES, Mario, 77830 Buehlertal (DE)
(86) Internationale Anmeldenummer: PCT/EP2007/057892
(87) Internationale Veröffentlichungsnummer: WO 2008/037529

(56) Entgegenhaltungen:
- EP-A- 0 726 188
- EP-A- 1 577 182
- EP-A- 1 683 694
- FR-A- 2 864 717
- FR-A- 2 865 981

## Beschreibung

### Stand der Technik

Die Erfindung betrifft ein Anschlusssystem mit außenliegender Leitungsführung an Wischermotorgehäusen, wie es insbesondere für die Kontaktierung von Steuerkontakten an Wischermotoren in Fahrzeugen Verwendung finden kann.

Zur Verwendung von Elektromotoren als Antrieb von Wischeranlagen hat sich die Einbettung eines Elektromotors in eine komplexe Baugruppe, im folgenden Motorbaugruppe genannt, etabliert, die neben dem eigentlichen Motor Getriebekomponenten, Gehäuseteile, Befestigungsmittel und elektrische Anschlussmittel umfasst. Die elektrischen Anschlussmittel sind dabei häufig in unmittelbarer Nähe der zu kontaktierenden Motorteile angeordnet, um kurze Leitungswege realisieren zu können. Ein wesentlicher Bestandteil dieser elektrischen Anschlussmittel, über die eine Energieversorgung des Elektromotors während der Antriebsphasen erfolgt, sind sogenannte Kohlebürsten, die in einem Bürstenhalter angeordnet sind. Der Bürstenhalter ist in der Regel mit einem Steckplatz verbunden, der mit einem Anschlussstecker verbindbar ist, was während der Montage einen schnellen und einfachen Anschluss der Motorbaugruppe garantiert.

Im Interesse dieses vereinfachten Anschlusses sind die verwendeten Anschlussstecker häufig so ausgelegt, dass mit ihrer Konnektierung die vollständige Betriebsbereitschaft der Motorbaugruppe hergestellt wird. Daraus folgt, dass zu kontaktierende Bauteile, die an der Motorbaugruppe in einem Abstand zum Steckplatz am Bürstenhalter bzw. dem Anschlussstecker angeordnet sind, über gesonderte Zuleitungen angeschlossen werden müssen, die vom jeweiligen Einbauort der zu kontaktierenden Bauteile zum Steckplatz am Bürstenhalter bzw. dem Anschlussstecker führen, um die bereits angesprochene einstückige Verbindbarkeit zu gewährleisten.

Regelmäßig eingesetzte zu kontaktierende und zum Anschlussstecker beabstandete Bauteile an Motorbaugruppen, die als Wischerantrieb eingesetzt werden, sind Steuerkontakte, mit deren Hilfe die Stellung der Getriebeelemente innerhalb der Motorbaugruppe ermittelt wird, um eine korrekte Ansteuerung der Wendelage und Parklage einer Wischeranlage vornehmen zu können.

Die Steuerkontakte sind zu diesem Zweck so in einen Kontaktaufnehmer integriert, dass ihre Enden mit beweglichen Teilen des Getriebes, aus denen die genaue Stellung der Abtriebswelle, an der sich das Wischerblatt befindet, abgeleitet werden kann, in elektrisch leitenden Kontakt gelangen öder anderweitig kommunizieren können. Die Festlegung der Lage der Steuerkontakte erfolgt dabei durch eine entsprechende Fixierung des Kontaktaufnehmers, beispielsweise in einer Öffnung des Getriebegehäuses.

Insbesondere bei einer Anordnung des Bürstenhalters am Ende des Motorgehäuses ist zwischen den Steuerkontakten und dem am Bürstenhalter angeordneten Steckplatz ein größerer Abstand zu überbrücken, was gemäß dem Stand der Technik durch in den Getriebedeckel integrierte umspritzte Metallstreifen oder durch frei über die Außenseite der Motorbaugruppe verlaufende Kabel realisiert wird.

Die Variante mit im Getriebedeckel verlaufenden Metallstreifen verkompliziert die Herstellung des Getriebedeckels und erfordert bei erforderlich werdenden Adaptionen oder Defekten der Kontaktierung der Steuerkontakte stets den Ersatz des gesamten Getriebedeckels. Außerdem macht eine Kombination mit metallischen Gehäusekomponenten eine gesonderte Isolation weiter zu führender Leitungen erforderlich. Die Variante mit frei über die Außenseite der Motorbaugruppe verlaufenden Kabeln ist insbesondere mit der Gefahr einer Beschädigung der Kabel durch betriebsbedingte Schock- oder andere Fremdeinwirkungen verbunden, was bis zum Abreißen der Kabel und daraus resultierenden Funktionsstörungen führen kann.

Ferner ist aus der EP 0 726 188 A1 ein Wischerantrieb mit einer Steuerelektronik, die durch ein Gehäuse geschützt ist, bekannt. Dabei ist das Gehäuse der Steuerelektronik mittels Schrauben an einem Gehäuse des Wischerantriebs befestigt.

Aus der FR 2 864 717 ist ein Anschlussstecker bekannt, der außenseitig an einem Gehäuse des Wischerantriebs angeordnet ist. Dabei ist der Außenstecker mittels einer Rastverbindung mit dem Gehäuse des Wischerantriebs verbunden.

### Offenbarung der Erfindung

### Technische Aufgabe

Die Aufgabe der Erfindung besteht darin, ein Anschlusssystem für die elektrische Verbindung zweier beabstandet zueinander an einer Motorbaugruppe angeordneter Bauteile, insbesondere zum Anschluss von Steuerkontakten an Wischermotoren anzugeben, das sich durch einen geringen lnstallationsaufwand und eine gegenüber dem Stand der Technik verbesserte Funktionssicherheit auszeichnet und leicht an sich ändernde Anschlusserfordernisse angepasst werden kann.

### Technische Lösung

Gelöst wird die Aufgabe durch ein Ansschlusssystem mit den Merkmalen von Anspruch 1. Vorteilhafte Ausgestaltungen einer erfindungsgemäßen Anschlusssystems sind in den Unteransprüchen 2 bis 8 angegeben.

Die Erfindung besteht in einem Anschlusssystem mit außenliegender Leitungsführung zur elektrischen Verbindung mindestens zweier beabstandet zueinander an einer Motorbaugruppe angeordneter Bauteile, deren Positionen in Bezug auf die Gehäuseteile der Motorbaugruppe fixiert sind. Das erfindungsgemäße Anschlusssystem umfasst mindestens eine die an der Motorbaugruppe angeordneten Bauteile verbindende elektrische Leitung und ein Stützelement an der Außenseite des Gehäuses der Motorbaugruppe, das den geometrischen Verlauf der elektrischen Leitung bestimmt. Indem der geometrische Verlauf der elektrischen Leitung bestimmt wird, können die Nachteile von frei über die Außenseite der Motorbaugruppe verlaufenden Kabeln bereits durch die Festlegung eines geeigneten Verlaufes der Kabel vermieden werden. Der Verlauf der elektrischen Leitung wird dabei so gewählt, dass die Gefahr einer Beschädigung bei zu erwartenden Montage- und Wartungshandlungen vermieden wird. Außerdem stellt das Stützelement zumindest teilweise selbst einen Schutz der elektrischen Leitung vor Schock- und Fremdeinwirkungen dar.

### Vorteilhafte Wirkungen

Das erfindungsgemäße Anschlusssystem ist insbesondere für Anwendungen geeignet, in denen die Motorbaugruppe eine Motorbaugruppe eines Wischerantriebes eines Fahrzeuges ist und mindestens eines der Bauteile, deren Position in Bezug auf die Gehäuseteile der Motorbaugruppe fixiert ist, ein Kontaktaufnehmer mit Steuerkontakten zur Bestimmung der Stellung mindestens eines Getriebeelementes ist. In diesem Fall kann der konstruktiv bedingte relativ große Abstand zwischen dem Kontaktaufnehmer mit den Steuerkontakten und Anschlussmitteln zum Anschluss der Motorbaugruppe zur Realisierung der Antriebsfunktion erfindungsgemäß überbrückt werden.

Es ist von Vorteil, wenn das Stützelement ein Kunststoffkanal ist, der mit mindestens einem Gehäuseteil der Motorbaugruppe verbunden ist. Die Verbindung zum Gehäuseteil sorgt für eine ausreichende Positionsfixierung, die Ausführung des Stützelements als Kanal ermöglicht eine gekapselte Leitungsführung, was das System besonders unempfindlich gegenüber einer Beschädigung der elektrischen Leitungen macht.

Die elektrische Verbindung selbst kann über elektrische Leitungen in Form von Kabeln, also jeweils mit separater den Leitern zugeordneter Isolation, oder über elektrisch leitende Streifen mit aufeinander abgestimmten Relativpositionen erfolgen. Sowohl die Kabel als auch die elektrisch leitenden Streifen können in den Kunststoffkanal eingelegt und/oder eingespritzt werden. Die Variante des Einspritzens eröffnet eine besonders stabile, schockfeste und montagefreundliche Umsetzung des Erfindungsgedankens, wobei das Material des Kunststoffkanals, vorzugsweise Polypropylen, gleichzeitig als Isolator zwischen verschiedenen elektrischen Leitungen wirken kann.

Es ist besonders vorteilhaft, wenn das Stützelement fest mit dem Gehäuse eines Steckers oder Steckplatzes verbunden ist, über den der Anschluss der Motorbaugruppe erfolgt. In diesem Fall wirkt die herzustellende Verbindung zwischen dem Anschlussstecker oder dem Steckplatz und dem Gehäuseteil der Motorbaugruppe zusätzlich als Führungshilfe und Befestigung bei der Anordnung des Stützelementes. Das Stützelement kann im Gegenzug als Führungshilfe bei der Befestigung der Steckeranordnung zum Anschluss der Motorbaugruppe dienen.

Eine ebenso vorteilhafte Ausgestaltung eines erfindungsgemäßen Anschlusssystems ergibt sich, wenn das Stützelement fest mit einem Steckadapter verbunden ist, der zwischen einem Stecker, über den der Anschluss der Motorbaugruppe erfolgt, und einem am Motorgehäuse befindlichen Steckplatz angeordnet ist. Über einen derartigen Adapter kann mit geringem Aufwand eine Anpassung des Anschlusssystems an spezielle Kundenwünsche erfolgen, ohne den Steckplatz an der Motorbaugruppe verändern zu müssen. Werden das Stützelement und die zugehörigen elektrischen Leitungen mit dem Adapter verbunden, ergibt sich ein schnell auszutauschendes bzw. zu montierendes Bauteil mit dem vollen Funktionsumfang des erfindungsgemäßen Systems. Insbesondere in diesem Fall ist es vorteilhaft, wenn das Stützelement über mehrere Verbindungselemente lösbar mit mindestens einem Gehäuseteil der Motorbaugruppe verbunden ist.

Ist ein schneller Wechsel des Anschlusssystems nicht erforderlich, kann das Stützelement mit mindestens einem Gehäuseteil der Motorbaugruppe verklebt werden, was eine besonders robuste Ausführung ergibt, die auch ein versehentliches Hintergreifen des Stützelementes und damit verbundene Beschädigungen nahezu ausschließt.

Aus vorgenannten Gründen kann es ebenso vorteilhaft sein, wenn das Stützelement fest mit einem Kontaktaufnehmer mit Steuerkontakten verbunden ist.

### Kurze Beschreibung der Zeichnungen

An einem Ausführungsbeispiel wird die Erfindung näher erläutert. Es zeigen:
Fig. 1 den prinzipiellen Aufbau eines erfindungsgemäßen Anschlusssystems;
Fig. 2 ein erfindungsgemäßes Anschlusssystem mit Kunststoffkanal;
Fig. 3 eine Schnittdarstellung eines erfindungsgemäßen Kunststoffkanals mit Verbindungselementen;
Fig. 4 ein austauschbares Bauteil zur Realisierung eines erfindungsgemäßen Anschlusssystems.

### Ausführungsformen der Erfindung

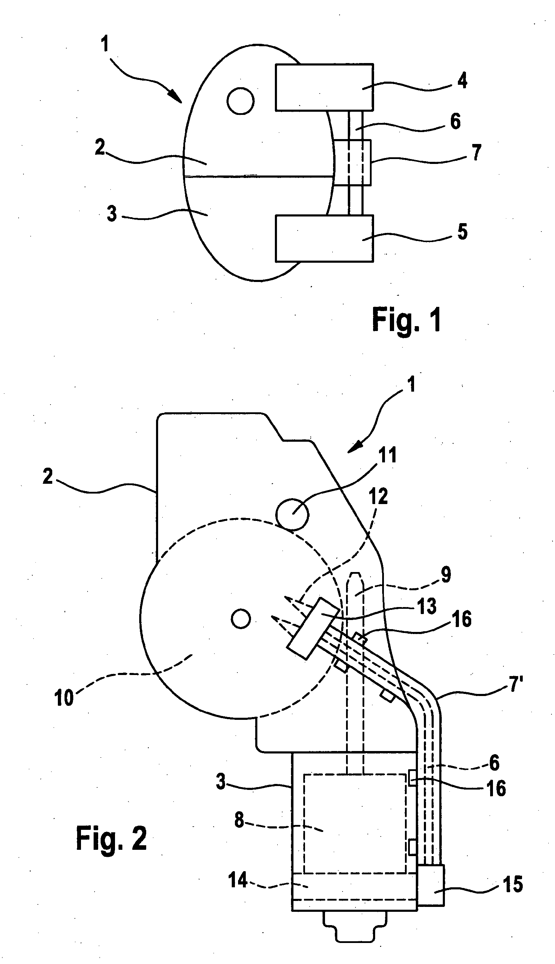

Figur 1 zeigt den prinzipiellen Aufbau eines erfindungsgemäßen Anschlusssystems mit außenliegender Leitungsführung. Dieses ist an einer Motorbaugruppe 1 mit mehreren Gehäuseteilen 2, 3 angeordnet und umfasst zwei beabstandet zueinander angeordnete Bauteile 4 und 5, deren Positionen in Bezug auf die Gehäuseteile 2, 3 der Motorbaugruppe 1 fixiert sind. Beide Bauteile 4, 5 sind durch eine elektrische Leitung 6 verbunden, wobei ein Stützelement 7, das den geometrischen Verlauf der elektrischen Leitung 6 bestimmt, an der Außenseite des Gehäuses 2, 3 der Motorbaugruppe 1 angeordnet ist.

Figur 2 zeigt ein erfindungsgemäßes Anschlusssystem mit einem Kunststoffkanal 7' als Stützelement. Die Motorbaugruppe 1 hat die typische Form eines als Einzelantrieb ausgebildeten Wischerantriebes mit Räderkurbelgetriebe. Die Anwendbarkeit der Erfindung ist jedoch keineswegs auf derartige Wischerantriebe beschränkt.

In einem unteren Gehäuseteil 3, dem Motorgehäuse, befindet sich ein Elektromotor 8. In einem oberen Gehäuseteil 2, dem Getriebegehäuse, ist ein Räderkurbelgetriebe untergebracht. Der Elektromotor 8 treibt über eine Motorwelle 9 ein Stirnrad 10 des Getriebes an und versetzt dieses bei Betätigung des Wischerantriebes in eine gleichmäßige Rotationsbewegung. Diese gleichmäßige Rotationsbewegung wird durch die spezielle Getriebeform in eine für einen Wischerantrieb erforderliche periodische Bewegung einer Abtriebswelle 11 umgesetzt.

Um die Position/Stellung der Abtriebswelle 11 zu bestimmen, sind in der Nähe des Stirnrades 10, das mit einer Kontaktscheibe versehen ist, Steuerkontakte 12 angeordnet, deren Position durch die Fixierung eines Kontaktaufnehmers 13 in einer Öffnung des Getriebegehäuses 2 bestimmt wird.

Am unteren Ende des Motorgehäuses, also dem der Motorwelle abgewandten Ende, befindet sich ein Bürstenhalter 14, welcher die zum Betrieb des Elektromotors erforderlichen Kohlebürsten trägt. Der Bürstenhalter umfasst an der Außenseite des Motorgehäuses einen Steckplatz oder Anschlussstecker, über den der Anschluss der gesamten Motorbaugruppe erfolgt. Das Steckergehäuse 15 umfasst alle dazu erforderlichen Kontakte.

Zwischen dem Kontaktaufnehmer 13 mit den Steuerkontakten 12 und dem Steckergehäuse 15 verlaufen elektrische Leitungen 6 zum Anschluss der Steuerkontakte 12. Der Abstand zwischen dem Anschlussstecker am Bürstenhalter 14 und dem Kontaktaufnehmer 13 wird dabei im Wesentlichen durch ein Stützelement in Form eines Kunststoffkanals 7' aus Polypropylen überbrückt, in den die elektrischen Leitungen 6 in Form einzelner Kabel eingelegt sind. Der Kunststoffkanal 7' ist fest mit dem Steckergehäuse 15 verbunden. Der Kontaktaufnehmer 13 ist dagegen flexibel mit dem Kunststoffkanal 7' verbunden, wodurch bei bestimmten Gehäuseformen die Montierbarkeit verbessert wird.

Alternativ dazu sind Ausgestaltungen möglich, in denen der Kontaktaufnehmer ebenfalls fest mit dem Kunststoffkanal verbunden ist. Weiterhin alternativ dazu können die Kabel gleichzeitig die einzigen Verbindungselemente zwischen dem Kontaktaufnehmer und dem Kunststoffkanal darstellen, was beispielsweise durch einen Spalt zwischen dem Kunststoffkanal und dem Kontaktaufnehmer realisiert werden kann, in welchem die ansonsten gekapselt verlaufenden Kabel frei liegen.

Der Kunststoffkanal 7' selbst ist über mehrere Verbindungselemente 16 lösbar mit dem Getriebegehäuse 2 und dem Motorgehäuse 3 verbunden.

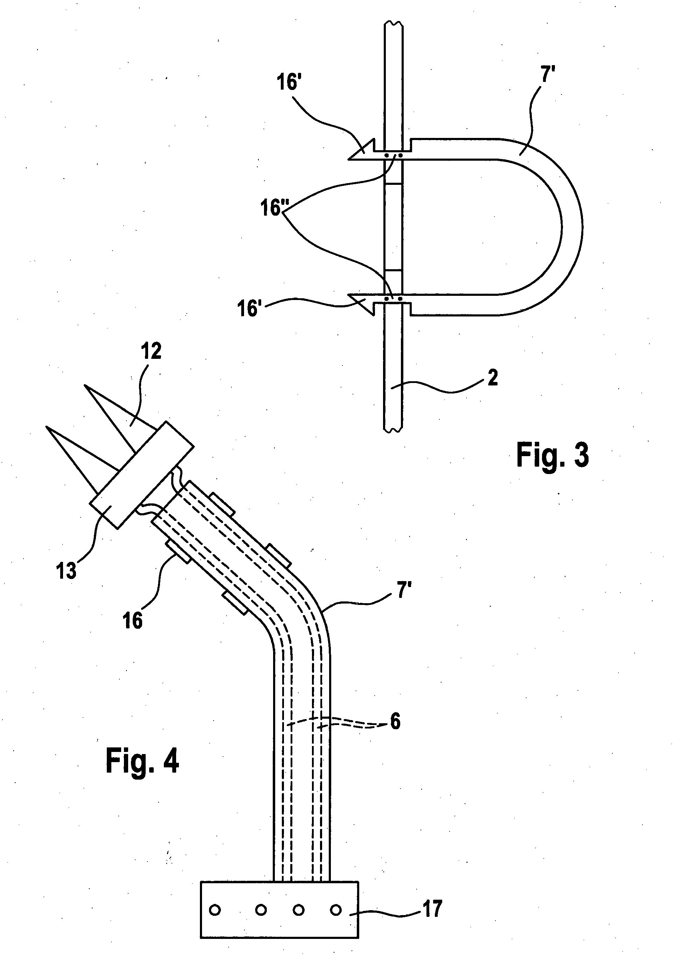

Figur 3 zeigt eine Schnittdarstellung eines erfindungsgemäßen Kunststoffkanals 7' mit beispielhaften Verbindungselementen. Um eine lösbare Verbindung zwischen den Kunststoffkanal 7' mit u-förmigem Querschnitt und einem entsprechenden Gehäuseteil 2 herstellen zu können, weist der Kunststoffkanal an seinem Rand in Verlängerung der seitlichen Kanalwände mit Hakenelementen 16' versehene Stifte 16" auf, die in korrespondierende Öffnungen im jeweiligen Gehäuseteil 2 einzuführen sind. Die Position der Stifte 16" ist dabei so gewählt, dass die Hakenelemente 16' bei eingeführten Stiften 16" die durchbrochene Gehäusefläche 2 hintergreifen, wobei diese Position durch elastische Rückstellkräfte, die durch eine geringe Deformation des Kunststoffkanals 7' hervorgerufen werden, ausreichend gesichert wird. Dadurch ergibt sich eine rastende überwiegend formschlüssige Verbindung zwischen dem Kunststoffkanal 7' und dem jeweiligen Gehäuseteil 2, die durch eine stärkere Deformation des Kunststoffkanals 7', die beispielsweise durch kräftiges Zusammendrücken erreicht werden kann, einfach wieder zu lösen ist, wenn die Deformation für ein ausreichendes Ausrücken der Hakenelemente 16' sorgt. Alternativ dazu sind Bohrungen im unteren Gehäuseteil 3, dem Motorgehäuse oder sogenannten Polgehäuse, denkbar, in welche am Kunststoffkanal 7 befindliche Klipse einrasten können. Diese Bohrungen wären zwischen evtl. dort angeordneten Magneten auszuführen.

Alternativ dazu sind komplementäre Rastsysteme denkbar, in denen mit den Gehäuseflächen verbundene Hakenelemente in entsprechende Öffnungen im Kunststoffkanal eingreifen und elastisch verspreizt werden.

Figur 4 zeigt ein austauschbares Bauteil zur Realisierung eines erfindungsgemäßen Anschlusssystems. Dieses Bauteil umfasst einen Steckadapter 17, der zwischen einem Anschlussstecker, über den der Anschluss der Motorbaugruppe erfolgt, und einem am Motorgehäuse befindlichen Steckplatz angeordnet wird. An diesem Steckadapter 17 ist wiederum ein Kunststoffkanal 7' als Stützelement angeordnet. Am dem Adapter abgewandten Ende des Kunststoffkanals 7' ist ein Kontaktaufnehmer 13 mit Steuerkontakten 12 angebracht. Die Steuerkontakte 12 am Kontaktaufnehmer 13 sind über in den Kunststoffkanal 7' eingelegte Kabel 6 mit entsprechenden Anschlüssen im Steckadapter verbunden. Durch die Einbeziehung des Steckadapters 16 in das Anschlusskonzept der Motorbaugruppe können verschiedene Kundenstecker an den Steckplatz am Motorgehäuse angeschlossen werden. Durch die beschriebene Kombination von Steckadapter 16, Kunststoffkanal 7' mit eingelegten Kabeln 6 und Kontaktaufnehmer 13 mit Steuerkontakten 12 ergibt sich ein schnell auszutauschendes bzw. zu montierendes Bauteil mit dem vollen Funktionsumfang des erfindungsgemäßen Systems.

Zunächst ist bei der Montage der Kontaktaufnehmer mit den Steuerkontakten in eine dafür vorgesehene Öffnung im Getriebegehäuse einzuführen und zu befestigen. Anschließend wird der Steckadapter auf den Steckplatz am Motorgehäuse aufgesetzt und der Kunststoffkanal befestigt. Der Vorteil des schnell austauschbaren Adapters bleibt dabei erhalten, wenn die Befestigung des Kunststoffkanals lösbar erfolgt. Zu diesem Zweck weist der Kunststoffkanal in dem Teil, der am Getriebegehäuse befestigt wird, ebenfalls die, bereits beschriebenen Verbindungselemente auf, die für die Realisierung einer rastenden Verbindung erforderlich sind. Am Motorgehäuse sind außer dem aufgesetzten Steckadapter keine weiteren Fixpunkte vorhanden. Die Steifigkeit des Kunststoffkanals sorgt dennoch für eine ausreichende Stabilisierung und geometrische Bestimmung des Leitungsverlaufes im Sinne der Erfindung. Durch diese Bauform wird vermieden, das Motorgehäuse, das häufig aus relativ massivem Metall besteht, für entsprechende Befestigungsmittel umzuarbeiten. Die zur Realisierung der lösbaren Befestigung erforderlichen Aufnahmen werden stattdessen ausschließlich im Bereich des Getriebegehäuses erforderlich, was durch seine Ausführung aus Kunststoff, beispielsweise als Spritzgussteil, mit einem wesentlich geringerem Aufwand verbunden ist. Gegebenenfalls kann die erfindungsgemäße Befestigung des Kunststoffkanals durch weitere Befestigungsmittel, beispielsweise durch entsprechende Binder, unterstützt werden.

## Patentansprüche

1. Anschlusssystem mit außenliegender Leitungsführung zur elektrischen Verbindung mindestens zweier beabstandet zueinander an einer Motorbaugruppe (1) angeordneter Bauteile (4, 5), deren Positionen in Bezug auf die Gehäuseteile (2, 3) der Motorbaugruppe (1) fixiert sind, umfassend mindestens eine die an der Motorbaugruppe (1) angeordneten Bauteile (4, 5) verbindende elektrische Leitung (6) und ein Stützelement (7) an der Außenseite des Gehäuses (2, 3) der Motorbaugruppe (1), das den geometrischen Verlauf der elektrischen Leitung (6) bestimmt, wobei das Stützelement (7) als Kunststoffkanal (7') ausgeführt ist **dadurch gekennzeichnet, dass** der Kunststoffkanal (7') über mehrere Verbindungselemente (16) lösbar mit mindestens einem Gehäuseteil (2, 3) der Motorbaugruppe (1) verbunden ist, wobei der Kunststoffkanal (7') einen U-förmigen Querschnitt und an seinem Rand in Verlängerung der seitlichen Kanalwände mit Hakenelementen (16') versehene Stifte (16") aufweist, die in korrespondierende Öffnungen im jeweiligen Gehäuseteil (2, 3) eingeführt sind, wobei eine Position der Stifte (16") derart gewählt ist, dass die Hakenelemente (16') bei eingeführten Stiften (16") die durchbrochene Gehäusefläche (2) hintergreifen, wobei die Position durch elastische Rückstellkräfte, die durch eine geringe Deformation des Kunststoffkanals (7') hervorgerufen werden, gesichert wird.

2. Anschlusssystem nach Anspruch 1, **dadurch gekennzeichnet, dass** die Motorbaugruppe (1) eine Motorbaugruppe eines Wischerantriebes eines Fahrzeuges ist und mindestens eines der Bauteile, deren Positionen in Bezug auf die Gehäuseteile (2, 3) der Motorbaugruppe fixiert sind, ein Kontaktaufnehmer (13) mit Steuerkontakten (12) zur Bestimmung der Stellung mindestens eines Getriebeelementes ist.

3. Anschlusssystem nach Anspruch 2, **dadurch gekennzeichnet, dass** der Kunststoffkanal (7') als elektrische Leitung (6) mindestens ein in den Kunststoffkanal (7') eingelegtes Kabel oder einen in den Kunststoffkanal (7') eingelegten leitfähigen Streifen enthält.

4. Anschlusssystem nach Anspruch 3, **dadurch gekennzeichnet, dass** der Kunststoffkanal (7') als elektrische Leitung (6) mindestens einen in den Kunststoffkanal (7') eingespritzten leitfähigen Streifen oder ein in den Kunststoffkanal (7') eingespritztes Kabel enthält.

5. Anschlusssystem nach einem der Ansprüche 1 bis 4, **dadurch gekennzeichnet, dass** das Stützelement (7) fest mit dem Gehäuse (15) eines Steckers oder Steckplatzes verbunden ist, über den der Anschluss der Motorbaugruppe (1) erfolgt.

6. Anschlusssystem nach einem der Ansprüche 1 bis 4, **dadurch gekennzeichnet, dass** das Stützelement (7) mit einem Steckadapter (17) verbunden ist, der zwischen einem Stecker, über den der Anschluss der Motorbaugruppe erfolgt, und einem am Motorgehäuse befindlichen Steckplatz angeordnet ist.

7. Anschlusssystem nach einem der Ansprüche 1 bis 6, **dadurch gekennzeichnet, dass** das Stützelement (7) fest mit einem Kontaktaufnehmer (13) mit Steuerkontakten (12) zur Bestimmung der Stellung mindestens eines Getriebeelementes verbunden ist.

8. Anschlusssystem nach einem der Ansprüche 1 bis 7, **dadurch gekennzeichnet, dass** das Stützelement (7) mit mindestens einem Gehäuseteil (2, 3) der Motorbaugruppe (1) verklebt ist.

## Claims

1. Connection system comprising an external cable guide for electrically connecting at least two components (4, 5) which are arranged at a distance from one another on a motor assembly (1) and whose positions in relation to the housing parts (2, 3) of the motor assembly (1) are fixed, comprising at least one electrical line (6), which connects the components (4, 5) which are arranged on the motor assembly (1), and a supporting element (7) on the outside of the housing (2, 3) of the motor assembly (1), which supporting element determines the geometric profile of the electrical cable (6), wherein the supporting element (7) is designed as a plastic channel (7'), **characterized in that** the plastic channel (7') is releasably connected to at least one housing part (2, 3) of the motor assembly (1) by means of a plurality of connecting elements (16), wherein the plastic channel (7') has a U-shaped cross section and, at its edge in an extension of the lateral channel walls, pins (16") which are provided with hook elements (16') and are inserted into corresponding openings in the respective housing part (2, 3), wherein a position of the pins (16") is selected such that the hook elements (16') engage behind the perforated housing surface (2) when the pins (16") are inserted, wherein the position is ensured by elastic restoring forces which are created by slight deformation of the plastic channel (7').

2. Connection system according to Claim 1, **characterized in that** the motor assembly (1) is a motor assembly of a wiper drive of a vehicle, and at least one of the components, whose positions in relation to the housing parts (2, 3) of the motor assembly are fixed, is a contact holder (13) with control contacts (12) for determining the position of at least one gear mechanism element.

3. Connection system according to Claim 2, **characterized in that** the plastic channel (7') contains at least one cable which is inserted in the plastic channel (7') or a conductive strip which is inserted in the plastic channel (7') as an electrical line (6).

4. Connection system according to Claim 3, **characterized in that** the plastic channel (7') contains at least one conductive strip which is injection-molded in the plastic channel (7') or a cable which is injection-molded in the plastic channel (7') as an electrical line (6).

5. Connection system according to one of Claims 1 to 4, **characterized in that** the supporting element (7) is connected firmly to the housing (15) of a plug or plugging slot by means of which connection is made with the motor assembly (1).

6. Connection system according to one of Claims 1 to 4, **characterized in that** the supporting element (7) is connected to a plugging adapter (17) which is arranged between a plug, by means of which connection is made with the motor assembly, and a plugging slot which is located on the motor housing.

7. Connection system according to one of Claims 1 to 6, **characterized in that** the supporting element (7) is connected firmly to a contact holder (13) with control contacts (12) for determining the position of at least one gear mechanism element.

8. Connection system according to one of Claims 1 to 7, **characterized in that** the supporting element (7) is adhesively bonded to at least one housing part (2, 3) of the motor assembly (1).

## Revendications

1. Système de raccordement avec câblage externe pour la connexion électrique d'au moins deux composants (4, 5) disposés à distance l'un de l'autre sur un module de moteur (1), dont les positions sont fixées par rapport aux parties de boîtier (2, 3) du module de moteur (1), comprenant au moins une ligne électrique (6) reliant les composants (4, 5) disposés sur le module de moteur (1) et un élément de support (7) sur le côté extérieur du boîtier (2, 3) du module de moteur (1), lequel élément de support définit l'allure géométrique de la ligne électrique (6), l'élément de support (7) étant réalisé sous forme de canal en plastique (7'), **caractérisé en ce que** le canal en plastique (7') est connecté de manière desserrable à au moins une partie de boîtier (2, 3) du module de moteur (1) par le biais de plusieurs éléments de liaison (16), le canal en plastique (7') présentant une section transversale en forme de U et des goupilles (16") pourvues d'éléments de crochets (16') sur son bord dans le prolongement des parois de canal latérales, lesquelles goupilles sont introduites dans des ouvertures correspondantes dans la partie de boîtier respective (2, 3), une position des goupilles (16") étant sélectionnée de telle sorte que les éléments de crochets (16') viennent en prise par l'arrière avec la surface de boîtier traversée (2) lorsque les goupilles sont introduites (16"), la position étant fixée par des forces de rappel élastiques qui sont provoquées par une faible déformation du canal en plastique (7').

2. Système de raccordement selon la revendication 1, **caractérisé en ce que** le module de moteur (1) est un module de moteur d'un entraînement d'essuieglace d'un véhicule et au moins l'un des composants, dont les positions sont fixées par rapport aux parties de boîtier (2, 3) du module de moteur, est un récepteur de contact (13) avec des contacts de commande (12) pour déterminer la position d'au moins un élément d'engrenage.

3. Système de raccordement selon la revendication 2, **caractérisé en ce que** le canal en plastique (7') contient, en tant que ligne électrique (6), au moins un câble introduit dans le canal en plastique (7') ou un ruban conducteur introduit dans le canal en plastique (7').

4. Système de raccordement selon la revendication 3, **caractérisé en ce que** le canal en plastique (7'), en tant que ligne électrique (6), contient au moins un ruban conducteur moulé par injection dans le canal en plastique (7') ou un câble moulé par injection dans le canal en plastique (7').

5. Système de raccordement selon l'une quelconque des revendications 1 à 4, **caractérisé en ce que** l'élément de support (7) est connecté fixement au boîtier (15) d'un connecteur enfichable ou d'un point d'enfichage par le biais duquel se produit le raccordement du module de moteur (1).

6. Système de raccordement selon l'une quelconque des revendications 1 à 4, **caractérisé en ce que** l'élément de support (7) est connecté à un adaptateur enfichable (17) qui est disposé entre un connecteur enfichable par lequel a lieu le raccordement du module de moteur et un point d'enfichage se trouvant sur le boîtier de moteur.

7. Système de raccordement selon l'une quelconque des revendications 1 à 6, **caractérisé en ce que** l'élément de support (7) est connecté fixement à un récepteur de contact (13) avec des contacts de commande (12) pour déterminer la position d'au moins un élément d'engrenage.

8. Système de raccordement selon l'une quelconque des revendications 1 à 7, **caractérisé en ce que** l'élément de support (7) est collé à au moins une partie de boîtier (2, 3) du module de moteur (1).
